(19) Europäisches Patentamt
European Patent Office
Office européen des brevets

(11) Veröffentlichungsnummer: **0 230 957 B1**

# (12) EUROPÄISCHE PATENTSCHRIFT

(45) Veröffentlichungstag der Patentschrift: **14.10.92**

(51) Int. Cl.5: **C08K 5/16**, C09D 5/44, C07C 69/52

(21) Anmeldenummer: **87100686.2**

(22) Anmeldetag: **20.01.87**

## (54) Härtungskomponente für Kunstharze, die zur Amid- oder Esterbildung mit Carbonsäuren befähigte Gruppen enthalten.

(30) Priorität: **31.01.86 DE 3602981**

(43) Veröffentlichungstag der Anmeldung: **05.08.87 Patentblatt 87/32**

(45) Bekanntmachung des Hinweises auf die Patenterteilung: **14.10.92 Patentblatt 92/42**

(84) Benannte Vertragsstaaten: **AT BE CH DE FR GB IT LI NL SE**

(56) Entgegenhaltungen:
**EP-A- 0 164 546**
**DE-A- 2 639 491**

(73) Patentinhaber: **HOECHST AKTIENGESELLSCHAFT**
**Postfach 80 03 20**
**W-6230 Frankfurt am Main 80(DE)**

(72) Erfinder: **Walz, Gerd Dr.**
**Pfingstbornstrasse 99**
**W-6200 Wiesbaden(DE)**
Erfinder: **Plum, Helmut Dr.**
**Nibelungenstrasse 3**
**W-6204 Taunusstein 4(DE)**

EP 0 230 957 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der deutschen Offenlegungsschrift 34 17 441 (& EP-A-164 546) sind Härter für Kunstharze, die zur Amid- und/oder Esterbildung mit Carbonsäuren befähigte Gruppen enthalten. Diese Härter sind Michael-Additionsprodukte von zur Michael-Addition befähigten Mono- oder Dicarbonsäureestern an Verbindungen, die mindestens eine zur Michael-Addition befähigte Doppelbindung enthalten. Sie enthalten im Mittel mindestens zwei umesterungs- bzw. umamidierungsfähige Estergruppen pro Molekül.

Diese Härter zeichnen sich dadurch aus, daß sie mit zur Ester- oder Amidbildung befähigten Kunstharzen schon bei relativ niedrigen Temperaturen von etwa 160 °C unter Vernetzung reagieren, wobei die dabei entstehenden Spaltprodukte wenig umweltbelastend sind, vor allem, wenn die umesterungs- bzw. umamidierungsfähigen Estergruppen als Alkoholkomponente niedere Alkohole, insbesondere Ethanol enthalten.

Obwohl die bekannten Produkte sich bewahrt haben, besteht großes Interesse, die Vernetzungstemperatur weiter zu verringern, ohne daß die Eigenschaften der Beschichtungen verschlechtert werden.

Gegenstand der Erfindung ist daher eine Härtungskomponente für Kunstharze, die zur Ester- und/oder Amidbildung mit Carbonsäuren befähigte Gruppen enthalten, bestehend aus dem Michael-Additionsprodukt A) einer zu Michael-Addition befähigten, Estergruppen enthaltenden Verbindung B) an eine Verbindung C), die mindestens zwei zur Michael-Addition befähigte Doppelbindungen enthält, dadurch gekennzeichnet, daß das Produkt A) im Mittel mindestens eine polymerisationsfähige Doppelbindung und mindestens zwei umesterungs- bzw. umamidierungsfähige Estergruppen pro Molekül aufweist und daß die Verbindung B) ein Umsetzungsprodukt aus b1) CH-aktiven Alkylestern und b2) Polyisocyanaten darstellt.

Verbindungen C) sind grundsätzlich alle $\alpha,\beta$-ungesättigten Oxoverbindungen, die mindestens zwei Doppelbindungen enthalten. Bevorzugt verwendet man gemäß der Erfindung als zur Michael-Addition befähigte, Doppelbindungen enthaltende Verbindungen die Ester, Amide und Harnstoffderivate von $\alpha,\beta$-ungesättigten Mono- und/oder Dicarbonsäuren mit im allgemeinen 2 bis 10, vorzugsweise 3 bis 6 C-Atomen, wie Zimtsäure, Crotonsäure, Citraconsäure, Sorbinsäure, insbesondere Acrylsäure, Methacrylsäure, Dimethylacrylsäure, Crotonsäure, Maleinsäure und Fumarsäure. Nach einer Ausführungsform der Erfindung werden Ester aus einer $\alpha,\beta$-olefinisch ungesättigten Mono-oder Dicarbonsäure und einem Polyol, das vorzugsweise 2 bis 4 Hydroxylgruppen aufweist, eingesetzt. Beispiele für Polyole sind Ethylenglykol, die verschiedenen Propylen-und Butylenglykole, Neopentylglykol, Hexandiol, Octandiol, Glycerin, Trimethylolpropan, Hexantriol, Pentaerythrit, Sorbit, Polyglykolether wie Diethylen- oder Dipropylenglykol, jeweils einzeln oder im Gemisch. Beispiele für Polyamine für entsprechende Amide sind Alkylendiamine und deren Oligomere, wie Ethylendiamin, Propylendiamin, Butylendiamin, Diethylentriamin, Tetramine und höhere Homologe dieser Amine, ferner Aminoalkohole, wie Diethanolamin oder dergleichen.

Insbesondere kann der Ester der $\alpha,\beta$-olefinisch ungesättigten Säure ausgewählt sein aus der Gruppe der Alkandioldiacrylate oder -dimethacrylate, Trimethylolpropantriacrylat oder -trimethacrylat und Pentaerythrit-tetraacrylat oder -tetramethacrylat. Bei diesen Estern handelt es sich um leicht zugängliche Handelsprodukte.

Eine Gruppe von Härtungskomponenten, die besonders die Haftung von damit gehärteten Lackfilmen auf Stahlblech und die Haftung von Beschichtungen auf Polyvinylchlorid-Basis auf dem gehärteten Lackfilm günstig beeinflußt, umfaßt Michael-Additionsprodukte A), die als Verbindung C) substituierte Urethane oder Harnstoffe der allgemeinen Formel

$$(Ac\text{-}E\text{-}D)_m\text{-}X_m \qquad (I)$$

enthalten, in der die einzelnen Zeichen folgende Bedeutung haben

- $X_m$ ist der m-wertige Rest $R(NHCO)_m$ eines multifunktionellen Isocyanats, wobei R einen m-wertigen Kohlenwasserstoffrest, vorzugsweise einen aliphatischen, cycloaliphatischen oder aromatischen Rest, der gegebenenfalls durch Heteroatome (O, NH) unterbrochen sein kann, darstellt,
- m ist eine ganze Zahl von mindestens 2, vorzugsweise 2-10 und insbesondere 2 oder 3,
- Ac ist der Acylrest einer $\alpha,\beta$-ungesättigten Mono- oder Dicarbonsäure,
- E ist eine Amidogruppe oder ein Sauerstoffatom und
- D ist ein Aminoalkylen-, ein Aminocycloalkylen-, ein O-Alkylen- oder ein O-Cycloalkylenrest mit 2 bis 25, vorzugsweise 2 bis 8 C-Atomen.

In einer vorteilhaften Abwandlung der vorstehend gemäß Formel (I) beschriebenen Verbindung C) ist D ein Rest der Formel

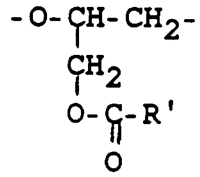

(II)

wobei R′ ein in α-Stellung zur Carboxylgruppe verzweigter Alkylrest mit 9-11 C-Atomen und E in Formel (I) ein Sauerstoffatom ist.

Lackfilme, die Verbindungen mit Resten der vorstehend angeführten Formel (II) enthalten, neigen vielfach weniger zur Kraterbildung während des Einbrennens und weisen günstige Korrosionsschutzeigenschaften auf.

Verbindung C) gemäß der Erfindung, die den Glycerinester einer in α-Stellung verzweigten Carbonsäure mit 9-11 C-Atomen als Molekülbestandteil enthalten (siehe obige Formel (II), erhält man beispielsweise dadurch, daß man aus einer α,β-ungesättigten Monocarbonsäure, einer entsprechenden Dicarbonsäure oder deren Anhydrid sowie einem Diol und dem Glycidylester einer in α-Stellung verzweigten Carbonsäure mit 9-11 C-Atomen einen ungesättigten Mischester herstellt.

In einer weiteren vorteilhaften Abwandlung der Härtungskomponente gemäß Formel (I) ist das Symbol D ein von einem 1,2-Diol abgeleiteter Rest und E ein Sauerstoffatom. Die entsprechende Ausgangsverbindung Ac-A-OH erhält man beispielsweise durch Umsetzung eines 1,2-Alkenoxids mit einer α,β-olefinisch-ungesättigten Mono-oder Dicarbonsäure. Mit steigender Kettenlänge des 1,2-Diols werden Härtungskomponenten erhalten, die bei der elektrophoretischen Abscheidung weichere Lackfilme ergeben, wodurch die Erzielung dickerer Lackschichten möglich ist. Im allgemeinen reicht es aus, wenn nur ein Teil der Härtungskomponenten aus einer derartigen weichmachenden Verbindung besteht. Ähnliche Wirkung zeigen Härtungskomponenten, bei denen D in Formel (I) die Struktur $O(CH_2)_yO\text{-}CO\text{-}(CH_2)_z$ aufweist, E ein Sauerstoffatom, y eine ganze Zahl von 1 bis 4, vorzugsweise 2, und z eine ganze Zahl von 5 bis 20, vorzugsweise 5-10, ist. Die entsprechende Ausgangsverbindung $Ac\text{-}O(CH_2)_y\text{-}OOC\text{-}(CH_2)_zOH$ erhält man beispielsweise durch Anlagerung eines Hydroxyalkylesters einer α,β-olefinisch-ungesättigten Carbonsäure an ein Lacton. Das Umsetzungsprodukt aus Hydroxyethylacrylat und ε-Caprolacton ist ein typischer, im Handel erhältlicher Vertreter dieser Verbindungsklasse.

Eine weitere Klasse von Härtungskomponenten gemäß der Erfindung sind die Michael-Additionsprodukte A), die als Komponente C) Amide von α,β-olefinisch ungesättigten Mono-oder Dicarbonsäuren der allgemeinen Formel

$R''(NH\text{-}Ac)_p$ (III) ,

enthalten,
in der R″ der Rest eines p-wertigen Amins, Ac der Acylrest einer α,β-olefinisch ungesättigten Mono- oder Dicarbonsäure und p eine ganze Zahl von 2-10, vorzugsweise 2 oder 3 ist, z.B. Methylenbisacrylamid, Toluylenbisacrylamid, Hexamethylenbisacrylamid oder Isophoronbisacrylamid.

Die zur Michael-Addition befähigten Verbindungen B) sind Umsetzungsprodukte aus b1) CH-aktiven Alkylestern und b2) Polyisocyanaten.

Als Polyisocyanate b2) werden bevorzugt die großtechnisch verfügbaren Stoffe wie Toluylendiisocyanat, Hexamethylendiisocyanat und Isophorondiisocyanat (IPDI) eingesetzt. Weiterhin sind hierfür die aus der Polyurethanchemie bekannten Verbindungen, einschließlich entsprechender Präpolymerer, geeignet. Beispiele für derartige Polyisocyanate sind die aliphatischen Trimethylen-, Tetramethylen-, Pentamethylen-, 1,2-Propylen-, 1,2-Butylen-, 2,3-Butylen-, 1,3-Butylen-, Äthylidin- und Butylidindiisocyanate, 2.2.4-Trimethylhexamethylendiisocyanat, 1,12-Dodecandiisocyanat, Dicycloalkylendiisocyanate wie 1,3-Cyclopentan-, 1,4-Cyclopentan- und 1,2-, 1,3- und 1,4-Cyclohexandiisocyanate; weiterhin Diisocyanate dimerer Säuren, aromatische Diisocyanate, wie 1,3-Phenylen-, 1,4-Phenylen-, 4,4′-Diphenyl-, 1,5-Naphthalin- und 1,4-Naphthalindiisocyanate, die aliphatisch-aromatischen Diisocyanate wie 4,4′-Diphenylenmethan-, 4,4′-Toluidin- und 1,4-Xylilendiisocyanate, Naphthalin-1,5-diisocyanat, kernsubstituierte aromatische Isocyanate wie Dianisidindiisocyanat, 4,4′-Diphenyletherdiisocyanat und Chlordiphenylendiisocyanat, Diphenylmethan-2,4′- und/oder -4,4′-diisocyanat, 3,2′- oder 3,4-Diisocyanato-4-methyldiphenylmethan, die Triisocyanate wie Triphenylmethan-4,4′-4″-Triisocyanat, 1,3,5-Benzoltriisocyanat und 2,4,6-Toluoltriisocyanat, und die Tetraisocyanate, wie 4,4′-Diphenyldimethyldimethan-2,2′-5,5′-tetraisocyanat oder Gemische dieser Verbindungen.

Neben diesen einfachen Polyisocyanaten sind auch solche geeignet, die Heteroatome in dem die

Isocyanatgruppen verknüpfenden Rest enthalten. Beispiele hierfür sind Polyisocyanate, die Carbodimidgruppen, Allophonatgruppen, Isocyanuratgruppen, Urethangruppen, acylierte Harnstoffgruppen und Biuretgruppen aufweisen.

Geeignete Polyisocyanate sind schließlich auch die bekannten, endständige Isocyanatgruppen aufweisenden Präpolymere, wie sie insbesondere durch Umsetzung der obengenannten einfachen Polyisocyanate, vor allem Diisocyanate mit unterschüssigen Mengen an organischen Verbindungen mit mindestens zwei gegenüber Isocyanatgruppen reaktionsfähigen Gruppen zugänglich sind. Als solche kommen insbesondere Verbindungen, die insgesamt mindestens zwei Aminogruppen und/oder Hydroxylgruppen aufweisen, zur Anwendung.

Als CH-aktive Alkylester b1) kommen Verbindungen der allgemeinen Formel

$X-CH_2-CO_2R$ (IV)

in Frage, wobei X = $-CO_2R$, -CN oder $-CH_3CO-$ und R einen Alkylrest mit l bis 8, vorzugsweise 1 bis 6 C-Atomen bedeutet. Insbesondere werden Cyanessigsäuremethyl,-ethyl-und -butylester, Malonsäuredimethylester und -diethylester eingesetzt. Es kann vorteilhaft sein, wenn R ein verzweigter Alkylrest, insbesondere 2-Ethylhexyl ist, da damit in manchen Fällen der Neigung einer Lackschicht zur Kraterbildung beim Einbrennen entgegengewirkt werden kann. Die Methyl- und Ethylester ergeben besonders niedrige Einbrenntemperaturen und niedermolekulare Abspaltprodukte, die außerdem besonders unbedenklich sind.

Die Herstellung der erfindungsgemäßen Härtungskomponenten B) und C) erfolgt nach an sich bekannten Methoden. Die Reaktion zwischen dem Polyisocyanat b2) und dem CH-aktiven Alkylester b1) zur Gewinnung der Komponente B) wird dabei bevorzugt in Anwesenheit von Lösungsmitteln durchgeführt, die keine aktiven Wasserstoffatome enthalten und inert gegenüber Isocyananten sind wie Ethylacetat, Butylacetat, Toluol, Methylethylketon, Ethylenglykoldimethylether etc. Sie kann jedoch auch ohne Lösemittel vorgenommen werden. Vorzugsweise erfolgt die Reaktion unter Stickstoffatmosphäre bei Ausschluß von Feuchtigkeit. Als Katalysator dient Natrium oder bevorzugt Natriumphenolat, welches in einer Menge von 0,1 - 0,5 Gew.-%, bezogen auf das Gesamtgewicht der Reaktionskomponenten, eingesetzt wird. Polyisocyanat und CH-aktiver Alkylester werden vorzugsweise in solchen Mengen verwendet, daß auf eine Isocyanatgruppe mindestens 1 Mol CH-aktiver Alkylester kommt. Es kann auch ein Überschuß an CH-aktivem Alkylester von 10-50 % eingesetzt werden.

Verbindungen C), die Urethan- oder Harnstoffgruppen enthalten, und die der Formel (I) entsprechen, erhält man durch Umsetzung von Hydroxyestern, Hydroxyamiden, Amiden, Aminoestern oder Aminoamiden von $\alpha,\beta$-olefinisch-ungesättigten Säuren mit Isocyanaten. Als Isocyanate können dabei vor allem die vorstehend beschriebenen Verbindungen eingesetzt werden. Die Bildung des Harnstoffs oder Urethans verläuft dabei im allgemeinen bei mäßigen Temperaturen und kann durch bekannte Katalysatoren, z.B. Dibutylzinndilaurat, beschleunigt werden. Wenn die Reaktion in einem Lösemittel durchgeführt werden soll, so wählt man ein gegenüber Isocyanaten inerte Lösemittel, wie sie vorstehend beschrieben sind. Für die Herstellung von Härterkomponenten, die in wäßrigen Systemen eingesetzt werden sollen, wählt man vorzugsweise ein wasserlösliches Lösemittel wie Diethylenglykoldimethylether, Aceton, Methylethylketon oder Methylisobutylketon.

Zu Verbindungen C), die Amidogruppen enthalten, gelangt man, wenn man statt eines Esters oder Amids die freie $\alpha,\beta$-olefinisch-ungesättigte Säure einsetzt. In diesem Fall bildet sich aus der Säure und dem Isocyanat unter Decarboxylierung direkt das entsprechende Amid.

Die Michael-Addition von B) an C) läuft im allgemeinen grundsätzlich bei Raumtemperatur ab. Durch Temperaturerhöhung und durch Zugabe von Katalysatoren kann sie beschleunigt werden. Geeignete Katalysatoren sind beispielsweise basische Verbindungen wie Alkalihydroxide, Alkalialkoholate und basische Aminverbindungen. Daneben kommen als Katalysatoren noch andere Verbindungen in Frage, wie sie etwa in der DE-Patentanmeldung P 35 41 140.6 beschrieben sind. Die Menge an Katalysator liegt im allgemeinen bei 0,01 bis 5, vorzugsweise 0,02-2 Gew.-%, bezogen auf das Gesamtgewicht der Reaktionskomponenten. Die $\alpha,\beta$-ungesättigte Oxoverbindung C) und das zur Michael-Addition befähigte Umsetzungsprodukt B) aus CH-aktiven Alkylestern b1) und Polyisocyanat b2) werden in solchen Mengen eingesetzt, daß auf 1 Mol Oxoverbindung wenigstens eine CH-aktive Alkylestergruppe kommt. Durch Erhöhung des Anteils des Umsetzungsprodukts B) steigen das Molekulargewicht und im allgemeinen die Funktionalitäten der Härter an zur Umesterung bzw. Umamidierung befähigten Estergruppen, während die Zahl der polymeren Doppelbindungen naturgemäß abnimmt.

Die erfindungsgemäßen Härtungskomponenten B) und C) sind in der vorliegenden Beschreibung als einheitliche chemische Individuen dargestellt. In der Praxis ergeben sich vielfach infolge der Multifunktionalität von Ausgangsstoffen statistische Gemische. Für die Verwendbarkeit als Härter gemäß der Erfindung

spielt das keine Rolle.

Die erfindungsgemäßen Härter A) können in Zweikomponentenlacken zusammen mit einem zur Amid- und/oder Esterbildung mit Carbonsäuren befähigten Kunstharz (Bindemittel) verwendet werden. Geeignet sind auch Kunstharze, die außerdem polymerisierbare Doppelbindungen enthalten. Diese Kunstharze sind an sich bekannte Verbindungen mit Molekulargewichten (Zahlenmittel) von etwa 300 bis etwa 20000, die vorzugsweise Hydroxylgruppen und/oder Aminogruppen, insbesondere primäre und/oder sekundäre Aminogruppen enthalten. Es sind dies beispielsweise härtbare Polyole (Polyesterpolyole, Polyetherpolyole, Polyharnstoffpolyole, polyolhaltige Acrylharze udgl.), wie sie beispielsweise in der DE-Offenlegungsschrift 31 24 784 beschrieben sind. Weiterhin kommen hier Phenol-, Harnstoff- und Melaminharze in Frage. Hydroxyl- und/oder aminogruppenhaltige Harze entstehen zum Beispiel durch Verwendung von Hydroxyestern und/oder Aminoestern von olefinisch ungesättigten Säuren wie Aminoalkylacrylaten oder Hydroxyalkylacrylaten oder entsprechender Methacrylate als Comonomere. Eine weitere Gruppe sind die aus dimerisierten Fettsäuren und Polyaminen erhältlichen Polyamino-polyamide. Amino-polyether-polyole erhält man z.B. durch Umsetzung von Epoxidharzen aus Polyphenolen und Epihalogenhydrinen mit primären und/oder sekundären Aminen. Kunstharze, die Carbonsäure- oder Aminogruppen enthalten, können vielfach durch Basen oder Säuren wasserlöslich gemacht und aus solchen Lösungen anodisch oder kathodisch abgeschieden werden. Aufgrund ihrer Hydrolysebeständigkeit eignen sich die erfindungsgemäßen Härtungskomponenten besonders als Bestandteil solcher Elektrotauchlacke. Besonders gute Ergebnisse werden in Verbindung mit kationischen Aminopolyether-polyolen erhalten.
Das Aminoäquivalentgewicht dieser Kunstharze betrifft zweckmäßigerweise 150 bis 3.000, vorzugsweise 500 bis 2.000. Das Hydroxyläquivalentgewicht, sofern diese Kunstharze OH-Gruppen besitzen, liegt im allgemeinen zwischen 150 und 1.000, vorzugsweise 200 und 500.

Die erfindungsgemäßen Härtungskomponenten A) kommen, wie erwähnt, vor allem in Elektrotauchlacken zum Einsatz. Daneben können sie auch in Lackzubereitungen verwendet werden, die durch andere Verfahren, wie Streichen, Spülen, Tauchen etc. auf das Substrat aufgetragen werden.

Zur Herstellung von kathodisch abscheidbaren Zubereitungen werden die in organischen Lösungsmitteln vorliegenden Aminogruppen-haltigen Kunstharze und Härter vermischt und die Aminogruppen ganz oder teilweise durch Umsetzung mit einer wasserlöslichen Säure, z.B. Ameisensäure, Essigsäure, Milchsäure, Phosphorsäure etc. neutralisiert, bevor mit Wasser verdünnt wird. Die Menge der Säure hängt im Einzelfall von den Eigenschaften des verwendeten Harzes ab und wird im allgemeinen nur so weit durchgeführt, daß das Harz solubilisiert oder dispergiert wird.

Wäßrige Zubereitungen, die einen besonders niedrigen Gehalt an flüchtigen, organischen Lösungsmitteln besitzen, erhält man, wie beispielsweise in der DE-Patentanmeldung P 36 02 980.7 beschrieben, durch Abdestillation der in den Bindemitteln von der Herstellung oder Lösung enthaltenen Lösungsmittel. Bevorzugt wird dieser Verfahrensschritt unter vermindertem Druck durchgeführt.

Den Lackzubereitungen können gegebenenfalls auch verschiedene Zusatzstoffe wie Pigmente, Pigmentpasten, Antioxidantien, oberflächenaktive Mittel, Lösungsmittel, Verlauf- und Verdickungsmittel, Reaktivverdünner etc. zugegeben werden. Diese Zusatzstoffe sind bekannt und werden üblicherweise in der Lackindustrie eingesetzt. Die elektrische Ablagerung der Lackteilchen erfolgt nach bekannten Verfahren, worauf hier Bezug genommen wird. Die Abscheidung kann auf allen elektrisch leitenden Substraten erfolgen, z.B. Metall, wie Stahl, Kupfer, Aluminium und dergleichen.

Die Härtung der Kunstharze erfolgt durch Umamidierung und/oder Umesterung mit den durch Michael-Addition eingeführten Estergruppen und durch Vernetzungsreaktionen der polymerisierbaren Doppelbindungen bei erhöhter Temperatur, wobei die erforderliche Temperatur von der Alkoholkomponente dieser Ester abhängig und um so tiefer ist, je niedriger das Molekulargewicht der Alkoholkomponente ist. Besonders niedrige Härtungstemperaturen erhält man daher mit den Methyl- und Ethylestern. Durch Zusatz von Katalysatoren, die die Umesterung bzw. Umamidierung beschleunigen, können die Härtungstemperaturen auf etwa 120 ° C gesenkt werden. Höhere Temperaturen bis etwa 250 ° C sind möglich.

Als Katalysatoren für die Härtung eignen sich beispielsweise Metallsalze organischer Säuren, insbesondere Zink-, Blei-, Eisen- oder Chromoctoat oder -naphthenat. Die Katalysatoren beschleunigen auch die Vernetzungsreaktionen der im Härtermolekül enthaltenden Doppelbindungen. Die Menge dieser Katalysatoren liegt im allgemeinen zwischen 0 und 10 Gew.-%, vorzugsweise zwischen 0,3 und 3,0 Gew.-%, berechnet als Gewichtsmenge Metall und bezogen auf das Gesamtgewicht von Kunstharz und Härter.

Kunstharze und Härter werden im allgemeinen in solchen Verhältnissen gemischt, daß das Verhältnis der Summe von Molen an zur Ester- und Amidbildung fähigen Gruppen im Kunstharz zur Summe der Mole an Doppelbindungen und umesterungs- und umamidierungsfähigen Gruppen im Härter 0,1 - 10, vorzugsweise 0,3 - 3 beträgt.

In den folgenden Beispielen sind Teile (T) Gewichtsteile und Prozent (%) Gewichtsprozent.

## Beispiele

### Beispiel 1

1a Herstellung des Härters (Michael-Additionsprodukt A))

Vorprodukt 1.1 (Umsetzungsprodukt B)): In ein Gemisch aus 132 T Malonsäuredimethylester und 0,73 T Natriumphenolat wurden innerhalb von einer Stunde kontinuierlich bei 65 °C 111 T 3-Isocyanatomethyl-3,5,5-trimethylcyclohexylisocyanat gegeben. Die Temperatur von 65 °C wurde solange belassen, bis der Isocyanatgehalt 0,5 % betrug, worauf der Reaktionsansatz mit 60,8 T Propylenglykolmonomethylether verdünnt wurde.

Vorprodukt 1.2 (Verbindung C): 5089,5 T Hydroxyethylacrylat, 39 T Acrylsäure, 5,4 T Hydrochinonmonomethylether und 10,8 T Zinn-II-octoat wurden vorgelegt und auf 130 °C erhitzt. Anschließend wurden 283 T Glycidylester einer gesättigten, in $\alpha$-Stellung verzweigten Fettsäure mit 9-11 C-Atomen mit einem Epoxid-Äquivalentgewicht von 245 innerhalb von 2 Stunden kontinuierlich zudosiert und der Ansatz solange bei 130 °C belassen, bis die Säurezahl < 1 ist. Nach Zugabe von 9,3 T Zinkacetylacetonat und 21,2 T Hydrochinonmonomethylether wurden bei 60 °C 4008,8 T ®Desmodur T 80 (Fa. Bayer AG) so schnell zudosiert, daß die Temperatur 65 °C nicht überschritt. Anschließend wurde der Ansatz solange bei 60 °C gehalten, bis der Gehalt an NCO-Gruppen <0,5 % betrug. Jeweils 21,2 T Hydrochinonmonomethylether wurden zum Zeitpunkt der halben und vollständigen Zudosierung von Desmodur T 80 und am Reaktionsende zugegeben. Der Ansatz wurde mit 1800 T Propylenglykolmonomethylether verdünnt.

Härter 1.3 (Verbindung A): Bei 60 °C wurden zu den 2992,5 T des Vorproduktes 1.2 12,6 T Triphenylphosphin (93 %ig) zugegeben und anschließend 2126,2 T des Vorproduktes 1.1 so schnell zudosiert, daß eine Temperatur von 65 °C nicht überschritten wurde. Nach beendeter Zugabe wurde bei 60 °C gehalten, bis der Gehalt an C = C-Doppelbindungen 2,75 % beträgt. Dann wurden 77,2 T Ameisensäure (50 %ig in Propylenglykolmonomethylester) zugesetzt und mit Propylenglykolmonomethylether auf 75 % Festkörper verdünnt.

1b) Herstellung des Bindemittels (Kunstharz mit zur Esterbildung befähigten Gruppen)

Es wurde nach bekannten Methoden ein Aminopolyetherpolyol aus 65,5 % eines Bisphenol-A-Epoxidharzesters mit einem Epoxidäquivalentgewicht von 480, 18,8 % eines Polyesters auf Basis Trimethylolpropan, Adipinsäure, Isononansäure und Tetrahydrophthalsäureanhydrid mit einer Säurezahl von 65 mg KOH/g und einer Hydroxylzahl von 310 mg KOH/g, 6,1 % Diethanolamin, 4,4 % 2-Ethylhexylamin, 5,2 % Diethylaminopropylamin hergestellt. Das Produkt hatte eine Aminzahl von 96 mg KOH/g und wurde 65 %ig in Propylenglykolmonomethylether gelöst.

1c) Elektrotauchlackierung und Prüfung

54 T einer 65 %igen Lösung des Bindemittels 1b wurden mit 2,5 T Bleisilikat, 13 T $TiO_2$, 2,5 T Ruß und 13 T Aluminiumsilikat als Füllstoff versetzt und auf einem Dreiwalzenstuhl abgerieben. Dann wurden weitere 54 T der 65 %igen Lösung des Bindemittels 1b, 40 T des 75 %igen Härters 1a, 2,8 T Bleioctoat und 7,6 T 5n Ameisensäure zugegeben. Mit einem schnell laufenden Rührwerk wurde der Ansatz homogenisiert und mit vollentsalztem Wasser verdünnt, bis der Festkörpergehalt 20 % betrug. Das Lackbad wurde 24 Stunden gerührt und wies dann folgende Kenndaten auf:
pH-Wert: 5,8, Leitfähigkeit: 1360 $\mu Scm^{-1}$, MEQ-Wert: 38. Auf phosphatiertem, als Kathode geschalteten Stahlblech wurde unter Einhaltung folgender Bedingungen:
Abscheidung bei 30 °C Badtemperatur, 2 Minuten bei 300 Volt und Härtung (30 min 120 °C), ein glatter Überzug mit einer Schichtdicke von 17 $\mu$m, einer Lösungsmittelbeständigkeit von mehr als 100 Doppelhüben mit Methylisobutylketon und einer Schlagtiefung nach Niessen von 80 cm erhalten.

### Beispiel 2

2a) Herstellung des Härters (Michael-Additionsprodukt A)

Vorprodukt 2.1 (Umsetzungsprodukt B): In ein Gemisch aus 1257,1 T Malonsäuredimethylester und 6,8 T Natriumphenolat wurden innerhalb von 1 Stunde kontinuierlich bei 65 °C 1000 T Trimethylhexamethylendiisocyanat gegeben. Die Reaktion war leicht exotherm. Die Reaktion wurde bei 65 °C fortgesetzt, bis der

Isocyanatgehalt <0,5 % betrug und der Ansatz dann mit 564 T Propylenglykolmonomethylether verdünnt.

Vorprodukt 2.2 (Verbindung C): Es wurde hierfür das gleiche Produkt wie Vorprodukt 1.2 eingesetzt.

Härter 2.3 (Verbindung A): Die Herstellung erfolgte analog der Herstellung des Härters 1.3 mit dem Unterschied, daß 2072.7 T des Vorproduktes 2.1 statt 2126,2 T des Vorproduktes 1.1 eingesetzt wurden.

2b) Elektrotauchlackierung und Prüfung

Aus dem Bindemittel 1b) und dem Harter 2a) wurde wie unter 1c) beschrieben, ein Lackbad hergestellt, das folgende Kenndaten aufwies:
pH-Wert: 6,7, Leitfähigkeit: 1420 $\mu Scm^{-1}$, MEQ-Wert: 37. Die Abscheidung und Härtung erfolgte wie in Beispiel 1c), wobei ein glatter Überzug mit einer Schichtdicke von 20 $\mu m$, einer Lösungsmittelbeständigkeit von mehr als 100 Doppelhüben mit Methylisobutylketon und einer Schlagtiefung nach Niessen von 60 cm erhalten wurde.

## Patentansprüche
## Patentansprüche für folgende Vertragsstaaten : BE, CH, DE, FR, GB, IT, LI, NL, SE

1. Härtungskomponente für Kunstharze, die zur Ester- und/oder Amidbildung mit Carbonsäuren befähigte Gruppen enthalten, bestehend aus dem Michael-Additionsprodukt A) einer zur Michael-Addition befähigten, Estergruppen enthaltenden Verbindung B) an eine Verbindung C), die mindestens zwei zur Michael-Addition befähigte Doppelbindungen enthält, dadurch gekennzeichnet, daß das Produkt A) im Mittel mindestens eine polymerisationsfähige Doppelbindung und mindestens zwei umesterungs- bzw. umamidierungsfähige Estergruppen pro Molekül aufweist und daß die Verbindung B) ein Umsetzungsprodukt aus b1) CH-aktiven Alkylestern und b2) Polyisocyanaten darstellt.

2. Härtungskomponente nach Anspruch 1, dadurch gekennzeichnet, daß die Verbindung C) ein Ester, ein Amid oder ein Harnstoffderivat einer $\alpha,\beta$-olefinisch-ungesättigten Mono- oder Dicarbonsäure ist.

3. Härtungskomponente nach Anspruch 2, dadurch gekennzeichnet, daß die $\alpha,\beta$-olefinisch-ungesättigte Säure Acrylsäure, Methacrylsäure, Dimethylacrylsäure, Crotonsäure, Maleinsäure oder Fumarsäure ist.

4. Härtungskomponente nach einem oder mehreren der Ansprüche 1 bis 3, dadurch gekennzeichnet, daß die Verbindung C) ein Ester einer $\alpha,\beta$-olefinisch-ungesättigten Mono- oder Dicarbonsäure mit einem Polyol ist.

5. Härtungskomponente nach Anspruch 4, dadurch gekennzeichnet, daß die Verbindung C) ein Alkandioldiacrylat oder -dimethylacrylat, ein Trimethylolpropantriacrylat oder -trimethyacrylat oder ein Pentaerythrit-tetraacrylat oder -tetramethacrylat ist.

6. Härtungskomponente nach einem oder mehreren der Ansprüche 1 bis 5, dadurch gekennzeichnet, daß die Verbindung C ein substituiertes Urethan oder ein substituierter Harnstoff der allgemeinen Formel

$$(Ac\text{-}E\text{-}D)_m\text{-}X_m \qquad (I)$$

ist, in der

- $X_m$ der m-wertige Rest $R(NHCO)_m$ eines multifunktionellen Isocyanats, wobei R einen m-wertigen Kohlenwasserstoffrest, der gegebenenfalls durch Heteroatome unterbrochen sein kann, darstellt,
- m eine ganze Zahl von mindestens 2, vorzugsweise 2 bis 10 ist,
- D ein Aminoalkylen-, O-Alkylen-, einen Aminocycloalkylen- oder einen O-Cycloalkylenrest bedeutet,
- E eine Amidogruppe oder ein Sauerstoffatom ist und
- Ac der Acylrest einer $\alpha,\beta$-olefinisch-ungesättigten Mono- oder Dicarbonsäure ist.

7. Härtungskomponente nach Anspruch 6, dadurch gekennzeichnet, daß die Gruppe D in Formel (I) ein Rest der Formel

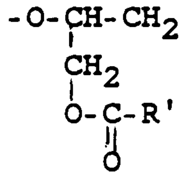

(II)

ist, wobei R′ ein in $\alpha$-Stellung zu der Carboxylgruppe verzweigter Alkylrest mit 9-11 C-Atomen ist, und E in Formel (II) ein Sauerstoffatom darstellt.

**8.** Härtungskomponente nach Anspruch 6, dadurch gekennzeichnet, daß in Formel (I) die Gruppe D ein von einem 1,2-Diol abgeleiteter Rest und E ein Sauerstoffatom ist.

**9.** Härtungskomponente nach Anspruch 6, dadurch gekennzeichnet, daß die Gruppe D in Formel (I) die Struktur $O(CH_2)_y$-O-OC-$(CH_2)_z$- aufweist, E ein Sauerstoffatom, y eine ganze Zahl von 1 bis 4, vorzugsweise 2, und z eine ganze Zahl von 5 bis 20, vorzugsweise 5 bis 10, ist.

**10.** Härtungskomponente nach einem oder mehreren der Ansprüche 1 bis 5, dadurch gekennzeichnet, daß die Verbindung C) ein Mischester aus einer $\alpha,\beta$-olefinisch-ungesättigten Dicarbonsäure, einem Diol und dem Glycerinester einer in $\alpha$-Stellung verzweigten Carbonsäure mit 9-11 C-Atomen ist.

**11.** Härtungskomponente nach einem oder mehreren der Ansprüche 1 bis 5, dadurch gekennzeichnet, daß die Verbindung C) ein Amid der allgemeinen Formel

$R''(NHAc)_p$ (III)

ist, in der R″ der Rest eines p-wertigen Amins, Ac der Acylrest einer $\alpha,\beta$-olefinisch-ungesättigten Mono- oder Dicarbonsäure und p eine ganze Zahl von 2 bis 20, vorzugsweise 2 bis 10, ist.

**12.** Härtungskomponente nach einem oder mehreren der Ansprüche 1 bis 11, dadurch gekennzeichnet, daß der CH-aktive Alkylester b1) ein Ester der Malonsäure, Acetessigsäure, Acetondicarbonsäure oder Cyanessigsäure mit 1-8 C-Atomen im Alkylrest ist.

**13.** Härtungskomponente nach einem oder mehreren der Ansprüche 1 bis 12, dadurch gekennzeichnet, daß der CH-aktive Alkylester b1) ein Methyl-, Ethyl-, Butyl-oder 2-Ethylhexylester ist.

**14.** Härtungskomponente nach einem oder mehreren der Ansprüche 1 bis 13, dadurch gekennzeichnet, daß das Polyisocyanat b2) ein aliphatisches oder aromatisches Diisocyanat ist.

**15.** Härtungskomponente nach Anspruch 11, bestehend aus dem Michael-Additionprodukt A) von 1 Mol des Umsetzungsproduktes B) an Methylenbisacrylamid, Toluylenbisacrylamid, Hexamethylenbisacrylamid oder Isophoronbisacrylamid.

**16.** Hitzehärtbare Mischung, bestehend im wesentlichen aus einem Kunstharz, das zur Ester- und/oder Amidbildung mit Carbonsäuren befähigte Gruppen enthält, einer Härtungskomponente sowie gegebenenfalls den üblichen Lackzusatzstoffen und Katalysatoren, dadurch gekennzeichnet, daß die Härtungskomponente derjenigen gemäß einem oder mehreren der Ansprüche 1 bis 15 entspricht.

**17.** Verwendung des Additionsprodukts A) gemäß einem oder mehreren der Ansprüche 1 bis 15 als Härter für Kunstharze, die zur Ester- und/oder Amidbildung mit Carbonsäuren befähigte Gruppen enthalten, in Lackzubereitungen.

**18.** Verwendung nach Anspruch 17, dadurch gekennzeichnet, daß es sich um wäßrige Lackzubereitungen handelt.

**19.** Verwendung nach Anspruch 18, dadurch gekennzeichnet, daß es sich um Elektrotauchlacke handelt.

**Patentansprüche für folgenden Vertragsstaat : AT**

1. Verfahren zur Herstellung eines Michael-Additionsproduktes A) als Härtungskomponente für Kunstharze, die zur Ester- und/oder Amidbildung mit Carbonsäuren befähigte Gruppen enthalten, durch Umsatz einer zur Michael-Addition befähigten, Estergruppen enthaltenden Verbindung B) mit einer Verbindung C), die mindestens zwei zur Michael-Addition befähigte Doppelbindungen enthält, dadurch gekennzeichnet, daß als Verbindung B) ein Umsetzungsprodukt aus b1) CH-aktiven Alkylestern und b2) Polyisocyanaten eingesetzt wird und die Komponenten B) und C) in einem solchen Verhältnis zur Reaktion gebracht werden, daß das resultierende Produkt A) im Mittel mindestens eine polymerisationsfähige Doppelbildung und mindestens zwei umesterungs- bzw. umamidierungsfähige Estergruppen pro Molekül aufweist.

2. Verfahren nach Anspruch 1, dadurch gekennzeichnet, daß als Verbindung C) ein Ester, ein Amid oder ein Harnstoffderivat einer $\alpha,\beta$-olefinisch-ungesättigten Mono- oder Dicarbonsäure eingesetzt wird.

3. Verfahren nach Anspruch 2, dadurch gekennzeichnet, daß die $\alpha,\beta$-olefinisch-ungesättigte Säure Acrylsäure, Methacrylsäure, Dimethylacrylsäure, Crotonsäure, Maleinsäure oder Fumarsäure ist.

4. Verfahren nach einem oder mehreren der Ansprüche 1 bis 3, dadurch gekennzeichnet, daß als Verbindung C) ein Ester einer $\alpha,\beta$-olefinisch-ungesättigten Mono- oder Dicarbonsäure mit einem Polyol verwendet wird.

5. Verfahren nach Anspruch 4, dadurch gekennzeichnet, daß die Verbindung C) ein Alkandioldiacrylat oder -dimethylacrylat, ein Trimethylolpropantriacrylat oder -trimethyacrylat oder ein Pentaerythrit-tetraacrylat oder -tetramethacrylat ist.

6. Verfahren nach einem oder mehreren der Ansprüche 1 bis 5, dadurch gekennzeichnet, daß als CH-aktiver Alkylester b1) ein Ester der Malonsäure, Acetessigsäure, Acetondicarbonsäure oder Cyanessigsäure mit 1-8 C-Atomen im Alkylrest eingesetzt wird.

7. Verfahren nach einem oder mehreren der Ansprüche 1 bis 6, dadurch gekennzeichnet, daß als CH-aktiver Alkylester b1) ein Methyl-, Ethyl-, Butyl- oder 2-Ethylhexylester eingesetzt wird.

8. Verfahren nach einem oder mehreren der Ansprüche 1 bis 7, dadurch gekennzeichnet, daß als Polyisocyanat b2) ein aliphatisches oder aromatisches Diisocyanat eingesetzt wird.

9. Verfahren nach einem oder mehreren der Ansprüche 1 bis 8, dadurch gekennzeichnet, daß die Verbindung C) die allgemeine Formel

   $(Ac\text{-}E\text{-}D)_m\text{-}X_m$ (I)

   ist, in der

   - $X_m$ der m-wertige Rest $R(NHCO)_m$ eines multifunktionellen Isocyanats, wobei R einen m-wertigen Kohlenwasserstoffrest, der gegebenenfals durch Heteroatome unterbrochen sein kann, darstellt,
   - m eine ganze Zahl von mindestens 2, vorzugsweise 2 bis 10 ist,
   - D ein Aminoalkylen-, O-Alkylen-, einen Aminocycloalkylen- oder einen O-Cycloalkylenrest bedeutet,
   - E eine Amidogruppe oder ein Sauerstoffatom ist und
   - Ac der Acylrest einer $\alpha,\beta$-olefinisch-ungesättigten Mono- oder Dicarbonsäure ist.

10. Verfahren nach Anspruch 9, dadurch gekennzeichnet, daß die Gruppe D in Formel (I) ein Rest der Formel

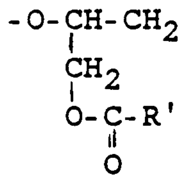

(II)

ist, wobei R' ein in α-Stellung zu der Carboxylgruppe verzweigter Alkylrest mit 9-11 C-Atomen ist, und E in Formel (II) ein Sauerstoffatom darstellt.

**11.** Verfahren nach anspruch 9, dadurch gekennzeichnet, daß in Formel (I) die Gruppe D ein von einem 1,2-Diol abgeleiteter Rest und E ein Sauerstoffatom ist.

**12.** Verfahren nach Anspruch 9. dadurch gekennzeichnet, daß die Gruppe D in Formel (I) die Struktur 0-$(CH_2)_y$-O-OC-$(CH_2)_z$- aufweist, E ein Sauerstoffatom, y eine ganze Zahl von 1 bis 4, vorzugsweise 2, und z eine ganze Zahl von 5 bis 20, vorzugsweise 5 bis 10, ist.

**13.** Verfahren nach einem oder mehreren der Ansprüche 1 bis 8, dadurch gekennzeichnet, daß als Verbindung C) ein Mischester aus einer α,β-olefinisch-ungesättigten Dicarbonsäure, einem Diol und dem Glycerinester einer in α-Stellung verzweigten Carbonsäure mit 9-11 C-Atomen eingesetzt wird.

**14.** Verfahren nach einem oder mehreren der Ansprüche 1 bis 8, dadurch gekennzeichnet, daß als Verbindung C) ein Amid der allgemeinen Formel

$R''(NHAc)_p$ (III)

eingesetzt wird, in der $R''$ der Rest eines p-wertigen Amins, Ac der Acylrest einer α,β-olefinisch-ungesättigten Mono- oder Dicarbonsäure und p eine ganze Zahl von 2 bis 20, vorzugsweise 2 bis 10, ist.

**15.** Verfahren nach Anspruch 14, dadurch gekennzeichnet, daß 1 Mol Umsetzungsproduktes B) an Methylenbisacrylamid, Toluylenbisacrylamid, Hexamethylenbisacrylamid oder Isophoronbisacrylamid als Verbindung C) angelagert wird.

**16.** Verwendung des Additionsproduktes A) gemäß einem oder mehreren der Ansprüche 1 bis 15 als Härter für Kunstharze, die zur Ester- und/oder Amidbildung mit Carbonsäuren befähigte Gruppen enthalten, in Lackzubereitungen.

**17.** Verwendung nach Anspruch 16, dadurch gekennzeichnet. daß es sich um wäßrige Lackzubereitungen handelt.

**18.** Verwendung nach Anspruch 17, dadurch gekennzeichnet, daß es sich um Elektrotauchlacke handelt.

**Claims**

**Claims for the following Contracting States : BE, CH, DE, FR, GB, IT, LI, NL, SE**

**1.** A hardening component for synthetic resins which contain groups which are capable of forming esters and/or amides with carboxylic acids, the hardening component comprising the product A) of the Michael addition of a compound B), containing Michael addition-capable ester groups, to a compound C), which contains at least two Michael addition-capable double bonds, wherein the product A) has an average of at least one polymerization-capable double bond and at least two transesterification-or transamidation-capable ester groups per molecule and wherein the compound B) represents a product of the reaction of b1) CH-active alkyl esters and b2) polyisocyanates.

**2.** A hardening component as claimed in claim 1, wherein compound C) is an ester, an amide or a urea derivative of an α,β-olefinically unsaturated mono- or dicarboxylic acid.

**3.** A hardening component as claimed in claim 2, wherein the $\alpha,\beta$-olefinically unsaturated acid is acrylic acid, methacrylic acid, dimethylacrylic acid, crotonic acid, maleic acid or fumaric acid.

**4.** A hardening component as claimed in one or more of claims 1 to 3, wherein the compound c) is an ester of an $\alpha,\beta$-olefinically unsaturated mono- or dicarboxylic acid with a polyol.

**5.** A hardening component as claimed in claim 4, wherein the compound C) is an alkanediol diacrylate or dimethylacrylate, a trimethylolpropane triacrylate or trimethylacrylate or a pentaerythrite tetraacrylate or tetramethacrylate.

**6.** A hardening component as claimed in one or more of claims 1 to 5, wherein the compound C) is a substituted urethane or a substituted urea of the formula

$(Ac\text{-}E\text{-}D)_m\text{-}X_m$ (I)

in which

- $X_m$ is the m-valent radical $R(NHCO)_m$ of a multifunctional isocyanate, where R represents an m-valent hydrocarbon radical which may be interrupted, if appropriate, by heteroatoms,
- m is an integer of at least 2, preferably 2 to 10,
- D denotes an aminoalkylene, O-alkylene, an aminocycloalkylene or an O-cycloalkylene radical,
- E is an amido group or an oxygen atom, and
- Ac is the acyl radical of an $\alpha,\beta$-olefinically unsaturated mono- or dicarboxylic acid.

**7.** A hardening component as claimed in claim 6, wherein the group D in the formula (I) is a radical of the formula

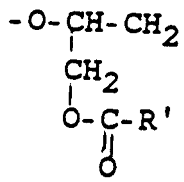

(II)

where R' is an alkyl radical, branched in the $\alpha$-position to the carboxyl group, having 9-11 carbon atoms, and E in the formula (II) represents an oxygen atom.

**8.** A hardening component as claimed in claim 6, wherein the group D in the formula (I) is a radical derived from a 1,2-diol, and E is an oxygen atom.

**9.** A hardening component as claimed in claim 6, wherein the group D in the formula (I) has the structure $O(CH_2)_y\text{-}O\text{-}OC\text{-}(CH_2)_z\text{-}$, E is an oxygen atom, y is an integer from 1 to 4, preferably 2, and z is an integer from 5 to 20, preferably 5 to 10.

**10.** A hardening component as claimed in one or more of claims 1 to 5, wherein the compound C) is a mixed ester of an $\alpha,\beta$-olefinically unsaturated dicarboxylic acid, a diol and the glycerol ester of a carboxylic acid, branched in the $\alpha$-position, having 9-11 carbon atoms.

**11.** A hardening component as claimed in one or more of claims 1 to 5, wherein the compound C) is an amide of the formula

$R''(NHAc)_p$ (III)

in which R" is the radical of a p-valent amine, Ac is the acyl radical of an $\alpha,\beta$-olefinically unsaturated mono- or dicarboxylic acid, and p is an integer from 2 to 20, preferably 2 to 10.

**12.** A hardening component as claimed in one or more of claims 1 to 11, wherein the CH-active alkyl ester b1) is an ester of malonic acid, acetoacetic acid, acetone-dicarboxylic acid or cyanoacetic acid having

1-8 carbon atoms in the alkyl radical.

**13.** A hardening component as claimed in one or more of claims 1 to 12, wherein the CH-active alkyl ester b1) is a methyl, ethyl, butyl or 2-ethylhexyl ester.

**14.** A hardening component as claimed in one or more of claims 1 to 13, wherein the polyisocyanate b2) is an aliphatic or aromatic diisocyanate.

**15.** A hardening component as claimed in claim 11, comprising the product A) of the Michael addition of 1 mole of the reaction product B) to methylene bisacrylamide, toluylene bisacrylamide, hexamethylene bisacrylamide or isophorone bisacrylamide.

**16.** A heat-hardenable mixture, essentially comprising a synthetic resin which contains groups which are capable of forming esters and/or amides with carboxylic acids, a hardening component, and also, if appropriate, the usual coating additives and catalysts, wherein the hardening component corresponds to that as claimed in one or more of claims 1 to 15.

**17.** The use of the addition product A) as claimed in one or more of claims 1 to 15 as hardener for synthetic resins which contain groups which are capable of forming esters and/or amides with carboxylic acids, in coating preparations.

**18.** The use as claimed in claim 17, relating to aqueous coating preparations.

**19.** The use as claimed in claim 18, which relates to electro-coating materials.

**Claims for the following Contracting State : AT**

**1.** Process for preparing a product A) of a Michael addition for use as a hardening component for synthetic resins which contain groups which are capable of forming esters and/or amides with carboxylic acids, by reacting a compound B), containing Michael addition-capable ester groups, with a compound C), which contains at least two Michael addition-capable double bonds, wherein the compound B) used is a product of the reaction of b1) CH-active alkyl esters and b2) polyisocyanates and components B) and C) are reacted in a ratio such that the resulting product A) has an average of at least one polymerization-capable double bond and at least two transesterification- or transamidation-capable ester groups per molecule.

**2.** The process as claimed in claim 1, wherein compound C) is an ester, an amide or an urea derivative of an $\alpha$, $\beta$-olefinically unsaturated mono- or dicarboxylic acid.

**3.** The process as claimed in claim 2, wherein the $\alpha$, $\beta$-olefinically unsaturated acid is acrylic acid, methacrylic acid, dimethylacrylic acid, crotonic acid, maleic acid or fumaric acid.

**4.** The process as claimed in one or more of claims 1 to 3, wherein the compound C) used is an ester of an $\alpha$, $\beta$-olefinically unsaturated mono- or dicarboxylic acid with a polyol.

**5.** The process as claimed in claim 4, wherein the compound C) is an alkanediol diacrylate or dimethylacrylate, a trimethylolpropane triacrylate or trimethylacrylate or a pentaerythrite tetraacrylate or tetramethacrylate.

**6.** The process as claimed in one or more of claims 1 to 5, wherein the CH-active alkyl ester b1) used is an ester of malonic acid, acetoacetic acid, acetonedicarboxylic acid or cyanoacetic acid having 1-8 carbon atoms in the alkyl radical.

**7.** The process as claimed in one or more of claims 1 to 6, wherein the CH-active alkyl ester b1) used is a methyl, ethyl, butyl or 2-ethylhexyl ester.

**8.** The process as claimed in one or more of claims 1 to 7, wherein the polyisocyanate b2) used is an aliphatic or aromatic diisocyanate.

**9.** The process as claimed in one or more of claims 1 to 8, wherein the compound C) corresponds to the formula

$(Ac\text{-}E\text{-}D)_m\text{-}X_m$(I)

in which

- $X_m$ is the m-valent radical $R(NHCO)_m$ of a multifunctional isocyanate, where R represents an m-valent hydrocarbon radical which may be interrupted, if appropriate, by heteroatoms,
- m is an integer of at least 2, preferably 2 to 10,
- D denotes an aminoalkylene, O-alkylene, an aminocycloalkylene or an O-cycloalkylene radical,
- E is an amido group or an oxygen atom, and
- Ac is the acyl radical of an $\alpha$, $\beta$-olefinically unsaturated mono- or dicarboxylic acid.

**10.** The process a claimed in claim 9, wherein the group D in the formula (I) is a radical of the formula

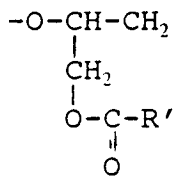

(II)

where R' is an alkyl radical, branched in the $\alpha$-position to the carboxyl group, having 9-11 carbon atoms, and E in the formula (I) represents an oxygen atom.

**11.** The process as claimed in claim 9, wherein the group D in the formula (I) is a radical derived from a 1,2-diol, and E is an oxygen atom.

**12.** The process as claimed in claim 9, wherein the group D in the formula (I) has the structure $O(CH_2)_y\text{-}O\text{-}OC\text{-}(CH_2)_z\text{-}$, E is an oxygen atom, y is an integer from 1 to 4, preferably 2, and z is an integer from 5 to 20, preferably 5 to 10.

**13.** The process as claimed in one or more of claims 1 to 8, wherein the ompound C) used is a mixed ester of an $\alpha$, $\beta$-olefinically unsaturated dicarboxylic acid, a diol and the glycerol ester of a carboxylic acid, branched in the $\alpha$-position, having 9-11 carbon atoms.

**14.** The process as claimed in one or more of claims 1 to 8, wherein the compound C) used is an amide of the formula

$R''(NHAc)_p$ (III)

in which R" is the radical of a p-valent amine, Ac is the acyl radical of an $\alpha$, $\beta$-olefinically unsaturated mono- or dicarboxylic acid, and p is an integer from 2 to 20, preferably 2 to 10.

**15.** The process as claimed in claim 14, wherein 1 mole of the reaction product B is added to methylene bisacrylamide, toluylene bisacrylamide, hexamethylene bisacrylamide or isophorone bisacrylamide as the compound C).

**16.** The use of the addition product A) as claimed in one or more of claims 1 to 15 as hardener for synthetic resins which contain groups which are capable of forming esters and/or amides with carboxylic acids, in coating preparations.

**17.** The use as claimed in claim 16, relating to aqueous coating preparations.

**18.** The use as claimed in claim 17, which relates to electro-coating materials.

**Revendications**

**Revendications pour les Etats contractants suivants : BE, CH, DE, FR, GB, IT, LI, NL, SE**

**1.** Composante de durcissement pour résines synthétiques à groupes aptes à former des esters et/ou des amides avec des acides carboxyliques, constituée du produit d'addition de Michael A) d'un composé B) à groupes esters pouvant donner lieu à une addition de Michael sur un composé C) ayant au moins deux doubles liaisons pouvant donner lieu à une addition de Michael, et qui est caractérisée en ce que la molécule du produit A) comporte en moyenne au moins une double liaison apte à une polymérisation et au moins deux groupes esters aptes à une transestérification ou à une transamidation, et en ce que le composé B) est un produit de réaction d'esters alkyliques à groupes CH actifs b1) avec b2) des polyisocyanates.

**2.** Composante de durcissement selon la revendication 1, caractérisée en ce que le composé C) est un ester, un amide ou un dérivé d'urée d'un acide monocarboxylique ou dicarboxylique $\alpha,\beta$-oléfinique insaturé.

**3.** Composante de durcissement selon la revendication 2, caractérisée en ce que l'acide $\alpha,\beta$-oléfinique insaturé est l'acide acrylique, méthacrylique, diméthylacrylique, crotonique, maléique ou fumarique.

**4.** Composante de durcissement selon une ou plusieurs des revendications 1 à 3, caractérisée en ce que le composé C) est un ester d'un acide monocarboxylique ou dicarboxylique $\alpha,\beta$-oléfinique insaturé.

**5.** Composante de durcissement selon la revendication 4, caractérisée en ce que le composé C) est un diacrylate ou un diméthacrylate d'alcane-diol, un triacrylate ou triméthacrylate de triméthylolpropane ou bien un tétraacrylate ou tétraméthacrylate de pentaérythritol.

**6.** Composante de durcissement selon une ou plusieurs des revendications 1 à 5, caractérisée en ce que le composé C) est un dérivé de substitution d'uréthanne ou d'urée de formule générale

$(Ac\text{-}E\text{-}D)_m\text{-}X_m$ (I)

dans laquelle

- $X_m$ est le radical de valence m $R(NHCO)_m$ d'un isocyanate polyfonctionnel, R désignant un radical hydrocarboné de valence m, pouvant être éventuellement interrompu par des hétéroatomes,
- m est un entier au moins égal à 2, de préférence de 2 à 10,
- Ac est le radical acyle d'un acide mono- ou dicarboxylique $\alpha,\beta$-oléfinique insaturé.
- E est un groupe amido ou un atome d'oxygène, et
- D est un radical aminoalkylène, aminocycloalkylène, O-alkylène ou O-cycloalkylène.

**7.** Composante de durcissement selon la revendication 6, caractérisée en ce que le groupe D de la formule (I) est un radical

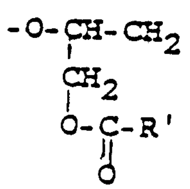

(II)

R' désignant un alkyle en $C_9$-$C_{11}$ ramifié à la position $\alpha$ par rapport au groupe carboxylique et le symbole E de la formule (I) désignant un atome d'oxygène.

**8.** Composante de durcissement selon la revendication 6, caractérisée en ce que le groupe D de la formule (I) est le radical d'un diol-1,2 et E un atome d'oxygène.

**9.** Composante de durcissement selon la revendication 6, caractérisée en ce que le groupe D de la formule (I) est un groupe $O(CH_2)_y$-O-OC-$(CH_2)_z$- et E un atome d'oxygène, y étant un entier de 1 à 4, de préférence 2, et z un entier de 5 à 20, de préférence de 5 à 10.

**10.** Composante de durcissement selon une ou plusieurs des revendications 1 à 5, caractérisée en ce que le composé C) est un ester mixte d'un acide dicarboxylique $\alpha,\beta$-oléfinique insaturé d'un diol et de l'ester du glycérol d'un acide carboxylique en $C_9$-$C_{11}$ ramifié à la position $\alpha$.

**11.** Composante de durcissement selon une ou plusieurs des revendications 1 à 5, caractérisée en ce que le composé C) est un amide de formule générale :

R"$(NH\text{-}Ac)_p$ (III)

dans laquelle R" représente le radical d'une amine de valence p, Ac le radical acyle d'un acide mono- ou dicarboxylique $\alpha,\beta$-oléfinique insaturé et p un entier de 2 à 20, de préférence de 2 à 10.

**12.** Composante de durcissement selon une ou plusieurs des revendications 1 à 11, caractérisée en ce que l'ester alkylique à CH actifs b1) est un ester de l'acide malonique, de l'acide acétylacétique, de l'acide acétone-dicarboxylique ou de l'acide cyanoacétique, dont l'alkyle a de 1 à 8 atomes de carbone.

**13.** Composante de durcissement selon une ou plusieurs des revendications 1 à 12, caractérisée en ce que l'ester alkylique b1) à CH actifs est un ester méthylique, éthylique, butylique ou 2-éthylhexylique.

**14.** Composante de durcissement selon une ou plusieurs des revendications 1 à 13, caractérisée en ce que le polyisocyanate b2) est un diisocyanate aliphatique ou aromatique.

**15.** Composante de durcissement selon la revendication 11, formée du produit d'addition de Michael A) de 1 mol du produit de reaction B) sur le méthylène-bis-acrylamide, le toluylène-bis-acrylamide, l'hexaméthylène-bis-acrylamide ou l'isophorone-bis-acrylamide.

**16.** Mélange durcissable sous l'action de la chaleur, essentiellement constitué d'une résine synthétique à groupes aptes à former des esters et/ou des amides avec des acides carboxyliques, d'une composante de durcissement et le cas échéant d'additifs courants pour vernis et peintures et de catalyseurs, mélange caractérisé en ce que la composante de durcissement est une composante telle que définie à une ou plusieurs des revendications 1 à 15.

**17.** L'emploi du produit d'addition A) selon une ou plusieurs des revendications 1 à 15 comme durcisseur de résines synthétiques à groupes aptes à former des esters et/ou des amides avec des acides carboxyliques, dans des préparations de vernis ou peintures.

**18.** Emploi selon la revendication 17, caractérisé en ce qu'il s'agit de préparations aqueuses.

**19.** Emploi selon la revendication 18, caractérisé en ce qu'il s'agit de vernis d'électrophorèse.

**Revendications pour l'Etat contractant suivant : AT**

**1.** Procédé de préparation d'un produit d'addition de Michael A) comme composante de durcissement pour résines synthétiques à groupes aptes à former des esters et/ou des amides avec des acides carboxyliques, par réaction d'un composé B) à groupes esters pouvant donner lieu à une addition de Michael avec un composé C) ayant au moins deux doubles liaisons aptes à une addition de Michael, procédé caractérisé en ce que le composé B) est un produit de réaction b1) d'esters alkyliques à groupes CH actifs avec b2) des polyisocyanates, et les composants B) et C) sont mis en réaction dans un rapport qui donne le produit formé A) avec en moyenne par molécule au moins une double liaison pouvant donner lieu à une polymérisation et au moins deux groupes esters aptes à une transestérification ou à une transamidation.

**2.** Procédé selon la revendication 1, caractérisé en ce que le composé C) est un ester, un amide ou un

dérivé d'urée d'un acide mono- ou dicarboxylique α,β-oléfinique insaturé.

**3.** Procédé selon la revendication 2, caractérisé en ce que l'acide α,β-oléfinique insaturé est l'acide acrylique ou méthacrylique, diméthylacrylique, crotonique, maléique ou fumarique.

**4.** Procédé selon une ou plusieurs des revendications 1 à 3, caractérisé en ce que le composé C) est un ester d'un acide mono- ou dicarboxylique α,β-oléfinique insaturé et d'un polyol.

**5.** Procédé selon la revendication 4, caractérisé en ce que le composé C) est un diacrylate ou un diméthacrylate d'un alcane-diol, un triacrylate ou triméthacrylate de triméthylolpropane ou bien un tétra-acrylate ou tétraméthacrylate de pentaérythritol.

**6.** Procédé selon une ou plusieurs des revendications 1 à 5, caractérisé en ce que l'ester alkylique b1) à CH actifs est un ester de l'acide malonique, acétylacétique, acétone-dicarboxylique ou cyanoacétique dont l'alkyle a de 1 à 8 atomes de carbone.

**7.** Procédé selon une ou plusieurs des revendications 1 à 6, caractérisé en ce que l'ester alkylique b1) à CH actifs est un ester méthylique, éthylique, butylique ou 2-éthylhexylique.

**8.** Procédé selon une ou plusieurs des revendications 1 à 7, caractérisé en ce que le poly-isocyanate b2) est un diisocyanate aliphatique ou aromatique.

**9.** Procédé selon une ou plusieurs des revendications 1 à 8, caractérisé en ce que le composé C) est un composé de formule générale

$(Ac\text{-}E\text{-}D)_m\text{-}X_m$ (I)

dans laquelle

- $X_m$ est le radical de valence m $R(NHCO)_m$ d'un isocyanate polyfonctionnel, R désignant un radical hydrocarboné de valence m, pouvant être éventuellement interrompu par des hétéro-atomes,
- m est un entier au moins égal à 2, de préférence de 2 à 10,
- Ac est le radical acyle d'un acide mono- ou dicarboxylique α,β-oléfinque insaturé.
- E est un groupe amido ou un atome d'oxygène, et
- D est un radical aminoalkylène, aminocycloalkylène, O-alkylène ou O-cycloalkylène.

**10.** Procédé selon la revendication 9, caractérisé en ce que le groupe D de la formule (I) est un radical

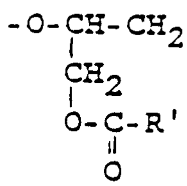

(II)

R' désignant un alkyle en $C_9$-$C_{11}$ ramifié à la position α par rapport au groupe carboxylique et le symbole E de la formule (I) désignant un atome d'oxygène.

**11.** Procédé selon la revendication 9, caractérisé en ce que le groupe D de la formule (I) est le radical d'un diol-1,2 et E un atome d'oxygène.

**12.** Procédé selon la revendication 9, caractérisé en ce que le groupe D de la formule (I) est un groupe $O\text{-}(CH_2)_yO\text{-}OC\text{-}(CH_2)_z$- et E un atome d'oxygène, y étant un entier de 1 à 4, de préférence 2, et z un entier de 5 à 20, de préférence de 5 à 10.

**13.** Procédé selon une ou plusieurs des revendications 1 à 8, caractérisé en ce que le composé C) est un

ester mixte d'un acide dicarboxylique $\alpha,\beta$-oléfinique insaturé d'un diol et de l'ester du glycérol d'un acide carboxylique en $C_9$-$C_{11}$ ramifié à la position $\alpha$.

**14.** Procédé selon une ou plusieurs des revendications 1 à 8, caractérisé en ce que le composé C) est un amide de formule générale :

$R''(NH\text{-}Ac)_p$ (III)

R" étant le radical d'une amine de valence p, Ac le radical acyle d'un acide mono- ou dicarboxylique $\alpha,\beta$-oléfinique insaturé et p un entier de 2 à 20, de préférence de 2 à 10.

**15.** Procédé selon la revendication 14, caractérisé en ce que l'on fixe 1 mol du produit de réaction B) sur le méthylène-bis-acrylamide, le toluylène-bis-acrylamide, l'hexaméthylène-bis-acrylamide ou l'isophorone-bisacrylamide comme composé C).

**16.** L'emploi du produit d'addition A) selon une ou plusieurs des revendications 1 à 15 comme durcisseur de résines synthétiques à groupes aptes à former des esters et/ou des amides avec des acides carboxyliques, dans des préparations de vernis ou peintures.

**17.** Emploi selon la revendication 16, caractérisé en ce qu'il s'agit de préparations aqueuses.

**18.** Emploi selon la revendication 17, caractérisé en ce qu'il s'agit de vernis d'électrophorèse.